# EUROPÄISCHE PATENTSCHRIFT

(11) **EP 1 794 857 B1**
(45) Veröffentlichungstag und Bekanntmachung des Hinweises auf die Patenterteilung: **26.08.2009**
(21) Anmeldenummer: 05789879.3
(22) Anmeldetag: 28.09.2005
(51) Int. Cl.: H02B 1/30

(54) **KABELEINFÜHRUNGSVORRICHTUNG FÜR EINE GEHÄUSEWAND**
CABLE ENTRY DEVICE FOR A HOUSING WALL
DISPOSITIF D'INTRODUCTION DE CABLE DESTINE A UNE PAROI DE BOITIER

(30) Priorität: 30.09.2004 DE 102004048055
(43) Veröffentlichungstag der Anmeldung: 13.06.2007
(73) Patentinhaber: Murrplastik Systemtechnik GmbH, 71570 Oppenweiler (DE)
(72) Erfinder: KRAUSS, Eckard, 71554 Weissach im Tal (DE); SOHN, Wolfgang, 71404 Korb (DE)
(74) Vertreter: Reule, Hanspeter
(86) Internationale Anmeldenummer: PCT/EP2005/010443
(87) Internationale Veröffentlichungsnummer: WO 2006/037522

(56) Entgegenhaltungen:
- DE-A1- 2 633 187
- DE-A1- 10 112 110
- DE-U1- 29 723 533
- US-A- 5 422 436

## Beschreibung

Die Erfindung betrifft eine Kabeleinführungsvorrichtung für eine Gehäusewand gemäß Oberbegriff des Anspruchs 1.

Kabeleinführungsvorrichtungen dieser Art dienen insbesondere dazu, Kabel durch die Wand und insbesondere durch den Boden eines Schaltschranks hindurchzuführen und gleichzeitig das Schaltschrankinnere gegen die Umgebung abzudichten. Bei einer Anwendung am Schaltschrankboden, der in der Regel nicht durch Feuchtigkeit beaufschlagt wird, muß lediglich eine Abdichtung gegen groben Schmutz sowie gegen Kleintiere, wie Insekten, sichergestellt werden. Eine bekannte Vorrichtung der eingangs genannten Art weist Bleche auf, die an einem Rahmen des Schaltschranks befestigt sind und dessen Boden bilden. Die Bleche weisen Durchbrechungen auf, die zu einer Längsseite der Bleche offen sind. Die Bleche sind so angeordnet, dass die Durchbrechungen paarweise miteinander kommunizieren, wobei zwei Durchbrechungen einen Bodendurchbruch bilden. In jede Durchbrechung ist eine Hälfte eines Halterahmens eingesetzt, in die Tüllen zur Aufnahme von Kabeln einschiebbar sind. Zwei Hälften werden mittels einer Schraubverbindung zu einem Halterahmen zusammengesetzt, der einen Bodendurchbruch vollständig ausfüllt. Die bekannte Vorrichtung hat den Nachteil, dass ein Austausch einzelner Kabel bzw. Kabeltüllen sehr aufwendig ist. Es müssen nicht nur die Bodenbleche vom Rahmen entfernt werden, sondern, um eine Tülle mit einem Kabel entnehmen zu können, muß der Halterahmen in seine beiden Hälften zerlegt werden.

Es ist daher Aufgabe der Erfindung, eine Kabeleinführungsvorrichtung der eingangs genannten Art derart weiterzubilden, dass sie bei ausreichender Abdichtwirkung einen einfacheren Austausch einzelner Kabel ermöglicht.

Die Aufgabe wird erfindungsgemäß durch eine Kabeleinführungsvorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass das zweite Wandsegment direkt an den Halterahmen an dessen Einschubseite anschließt. Der Halterahmen kann dadurch einteilig ausgeführt werden, wie in der DE 103 13 989 beschrieben, auf welche im Hinblick auf die Ausgestaltung des Halterahmens und der Tüllen ausdrücklich Bezug genommen wird. Wenn das zweite Wandsegment entfernt wird, können die Tüllen und die in ihnen geführten Kabel ohne weitere Demontage der Kabeleinführungsvorrichtung entnommen werden. Dies stellt eine deutliche Arbeitserleichterung beim Austausch einzelner Kabel gegenüber dem Stand der Technik dar.

Der Halterahmen kann mit seiner Einschubseite in der Draufsicht entlang der Begrenzungslinie fluchtend zur Längsseite des ersten Wandsegments, zuder die Durchbrechung offen ist, angeordnet sein oder über die Begrenzungslinie überstehen.

Der Halterahmen kann auf eine Fläche des ersten Wandsegments aufgesetzt und an diesem festgeschraubt sein. Alternativ oder ergänzend hierzu kann das erste Wandsegment auf seiner Fläche hervorstehende Rastelemente mit Rasthaken zum Festhalten des auf die Fläche aufgesetzten Halterahmens aufweisen. In beiden Fällen handelt es sich um einfache Befestigungsarten für den Halterahmen. Vorzugsweise wird der Halterahmen auf die dem Schaltschrankinneren zugewandte Fläche des Wandsegments aufgesetzt.

Eine alternative Befestigungsmethode des Halterahmens ist dadurch gegeben, dass die Durchbrechung an ihrem Umfangsrand ein erstes Führungsprofil aufweist, das komplementär zu einem zweiten Führungsprofil am Halterahmen ausgebildet ist. Der Halterahmen wird in die Durchbrechung eingeschoben, wobei die Führungsprofile kraft- und/oder formschlüssig ineinandergreifen. Bei dieser Ausführungsform kann das zweite Wandsegment vorteilhafterweise mit seiner Längsseite um Abdichten an der Einschubseite anliegen. Dadurch wird eine bessere Abdichtung erzielt, als wenn der Halterahmen auf eine Fläche des ersten Wandsegments aufgesetzt ist. Dieselbe Dichtwirkung kann auch bei auf die Fläche des ersten Wandsegments aufgesetztem Halterahmen erzielt werden, wenn das zweite Wandsegment an seiner Längsseite einen abgekanteten Streifen zum Anlegen an das erste Wandsegment und an den Halterahmen sowie an die Tüllen aufweist. Zweckmäßig weist das zweite Wandsegment an seiner Längsseite einen Dichtstreifen zum Anlegen an das erste Wandsegment und an den Halterahmen sowie an die Tüllen auf. Dadurch wird eine gute Abdichtung auch gegen Feuchtigkeit oder Staub erzielt. Vorzugsweise ist der Dichtstreifen kompressibel. Er sorgt so auch dann für eine gute Abdichtung, wenn der Halterahmen um wenige Millimeter über die Begrenzungslinie übersteht. Der Dichtstreifen kann an dem abgekanteten Streifen angebracht sein.

Die Wandsegmente bestehen zweckmäßig zumindest teilweise aus Metallblech. Vorzugsweise weist zumindest ein Teil der Wandsegmente Sicken und/oder Abkantungen zur Versteifung auf.

Es wird bevorzugt, dass mindestens eine der Rahmenöffnungen des Halterahmens Führungsprofile aufweist, in die komplementäre Führungsprofile in einer der Tüllen formschlüssig einschiebbar sind. Vorzugsweise weisen alle Rahmenöffnungen und Tüllen zueinander komplementäre Führungsprofile auf. Dies erleichtert das Einführen und Entnehmen der Tüllen. Desweiteren sind die Tüllen in Längsrichtung des aufgenommenen Kabels fest im Halterahmen gehalten. Zweckmäßig ist mindestens eine der Tüllen im Bereich der die Rahmenöffnungen begrenzenden Seitenwände in Einschubrichtung fixierbar. Hierzu sind die Seitenwände der Rahmenöffnungen vorzugsweise mit Rastvertiefungen der Rastkanten zur Aufnahme von partiell über die Tüllenoberfläche seitlich überstehenden Rastorganen versehen. Durch ein Fi-xieren, insbesondere Verrasten der Tüllen in Einschubrichtung, werden diese in ihrer Position gehalten.

Im Folgenden wird die Erfindung anhand der in der Zeichnung in schematischer Weise dargestellten Ausführungsbeispiele näher erläutert. Es zeigen
- Fig. 1: einen Schaltschrankboden mit einer Kabeleinführungsvorrichtung in Explosionsdarstellung;
- Fig. 2: einen teilweise mit Tüllen bestückten, auf einem Wandsegment befestigten Halterahmen in Draufsicht gemäß einem ersten Ausführungsbeispiel und
- Fig. 3: eine Seitenansicht zweier aneinander anliegender Wandsegmente mit an einer Längsseite angebrachtem Dichtstreifen gemäß einem zweiten Ausführungsbeispiel. -

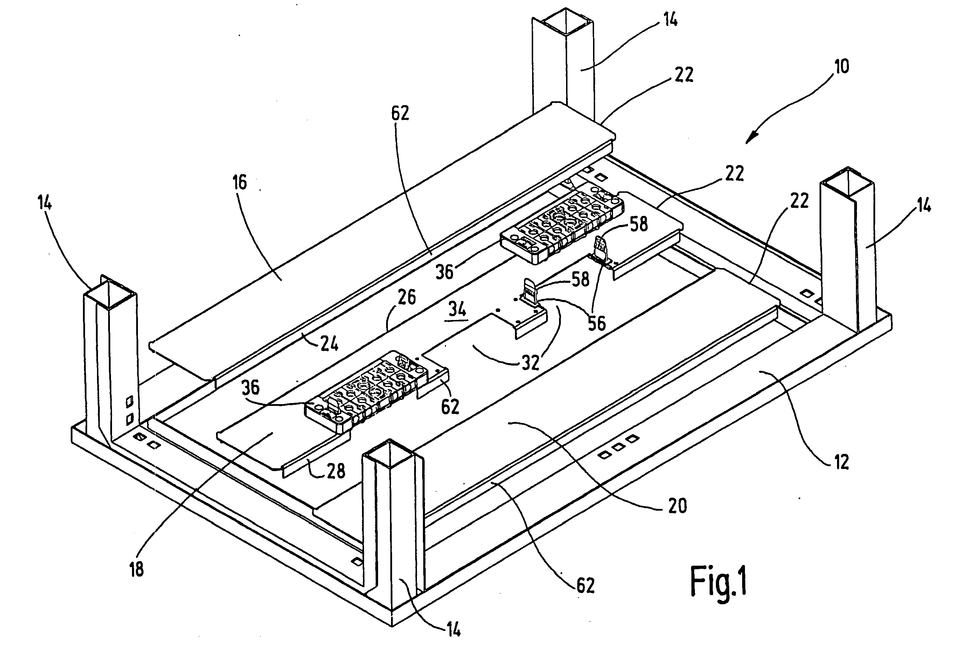

Ein Schaltschrankboden 10 gemäß Fig. 1 weist einen Rahmen 12 auf, von dem aus sich Stützen 14 senkrecht nach oben erstrecken, zwischen denen die Seitenwände des Schaltschranks eingesetzt werden können. Die Bodenfläche des Schaltschranks bilden Wandsegmente 16, 18, 20 in Form von langgestreckten, im Wesentlichen rechteckigen Metallblechen. Diese werden mit ihren Schmalseiten 22 am Rahmen 12 befestigt, wobei benachbarte Wandsegmente mit ihren Längsseiten 24, 26; 28, 30 aneinander anliegen.

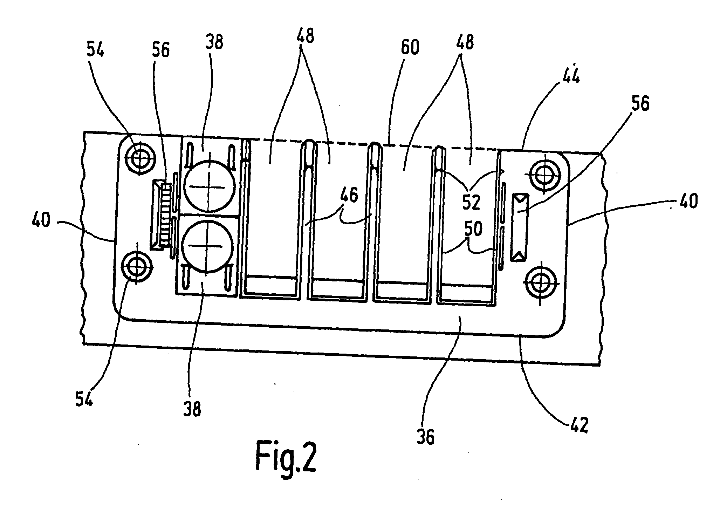

Eines der Wandsegmente 18 gemäß Fig. 1 weist Durchbrechungen 32 auf, die zu einer seiner Längsseiten 28 offen sind. Auf die dem Schaltschrankinneren zugewandte Oberfläche 34 dieses ersten Wandsegments 18 sind im Bereich der Durchbrechungen 32 Halterahmen 36 für Kabeltüllen 38 aus elastomerem Material befestigt. Ein solcher Halterahmen 36 (Fig. 2) ist im Wesentlichen rechteckig und ist an seinen beiden Schmalseitenrändern 40 und an einer Längsseite 42 geschlossen sowie an der gegenüberliegenden zweiten Längsseite 44 offen. Der Halterahmen 36 weist mehrere parallel zu den Schmalseitenrändern 40 ausgerichtete Rippen 46 auf, die eine entsprechende Anzahl Rahmenöffnungen 48 zur Aufnahme der Tüllen 38 begrenzen. Die Rahmenöffnungen 48 sind zur zweiten Längsseite 44 des Halterahmens 36 hin offen, so dass die Tüllen 38 von der offenen Seite 44 her in die Rahmenöffnungen 48 eingeschoben werden können. Die Rippen 46 weisen an ihren Seitenwänden 50 Führungsprofile auf, in die komplementäre Führungsprofile an den Tüllen 38 eingreifen. Desweiteren weisen die Rippen 46 an ihren Seitenwänden 50 Rastvertiefungen 52 auf, in die Rastorgane an den Tüllen 38 eingreifen, um diese in den Rahmenöffnungen 48 zu fixieren. Durch den Halterahmen 36 sind Schrauben 54 und am ersten Wandsegment 18 angeformte Rastelemente 56 mit Rasthaken 58 durchgeführt, um den Halterahmen 36 am ersten Wandsegment 18 zu fixieren. Bezüglich der Ausgestaltung des Halterahmens 36 und der Tüllen 38 wird ausdrücklich auf die DE 103 13 989 Bezug genommen, deren Offenbarungsgehalt in den Offenbarungsgehalt der vorliegenden Anmeldung einbezogen wird.

Der Halterahmen 36 ist mit seiner zweiten Längsseite 44 fluchtend mit der Längsseite 28 des ersten Wandsegments 18, zu der die Durchbrechungen 32 offen sind, angeordnet, derart, dass beide in der Draufsicht entlang einer Begrenzungslinie 60 angeordnet sind. Da die Tüllen 38 bündig mit der Außenkontur des Halterahmens 36 an dessen zweiter Längsseite 44 abschließen, sind auch diese entlang der Begrenzungslinie 60 angeordnet. An dieser Begrenzungslinie 60 liegt ein zweites Wandsegment 20 mit einer seiner Längsseiten 30 auf Stoß an. Dadurch wird eine Abdichtung des Schaltschrankbodens 10 gegen Eindringen von grobem Schmutz oder von Kleintieren erreicht. Jedes Wandsegment 16, 18, 20 weist an einer seiner Längsseiten eine Abkantung 62 auf, die dem Wandsegment eine erhöhte Biegefestigkeit verleiht.

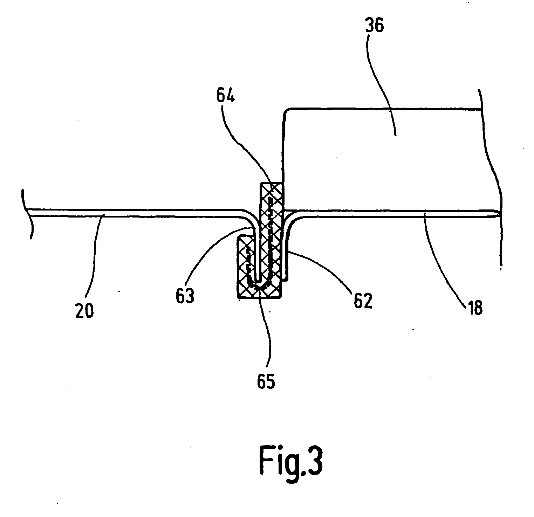

Gemäß einem zweiten Ausführungsbeispiel (Fig. 3) weist das zweite Wandsegment 20 an seiner an der Begrenzungslinie 60 anliegenden Längsseite 30 einen quer zu seiner Oberfläche verlaufenden Dichtstreifen 64 auf, der zum Abdichten sowohl an der Längsseite 28 des ersten Wandsegments 18 als auch am Halterahmen 36 und an den Tüllen 38 anliegt. Der Dichtstreifen 64 weist eine U-Form auf und ist auf einen am zweiten Wandsegment 20 nach unten abgekanteten Streifen 63 aufgeklemmt. Er besteht aus kompressiblem Material wie Gummi oder Schaumstoff, das eine Metallseele 65 umhüllt. Der Dichtstreifen steht über die Oberfläche des zweiten Wandsegments 20 über und liegt an der Einschubseite 44 des Halterahmens 36 an, die im zweiten Ausführungsbeispiel um 1 mm bis 2 mm über die Begrenzungslinie 60 übersteht. Dadurch wird eine bessere Abdichtung des Schaltschrankbodens 10 auch gegen das Eindringen von Feuchtigkeit erreicht.

Zusammenfassend ist folgendes festzuhalten: Die Erfindung betrifft eine Kabeleinführungsvorrichtung für eine Gehäusewand, vorzugsweise für den Boden 10 eines Schaltschranks, die einen Rahmen 12 aufweist, in den einzelne, aneinandergereihte flächige Wandsegmente 16, 18,20 eingesetzt sind, welche mit ihren Schmalseiten 22 am Rahmen 12 befestigt sind, wobei zumindest ein erstes Wandsegment 18 mindestens eine zu einer seiner Längsseiten 28 offene Durchbrechung 32 aufweist, an der ein Halterahmen 36 angebracht ist, wobei der Halterahmen 36 Rahmenöffnungen 48 aufweist, die zu einer Einschubseite 44 des Halterahmens 36 offen sind und in die Tüllen 38 zur Aufnahme von durch die Durchbrechung 32 durchzuführenden Kabeln bündig mit der Außenkontur des Halterahmens 36 an der Einschubseite 44 abschließend einsetzbar sind, und wobei der Halterahmen 36 mit seiner Einschubseite 44 sich in der Draufsicht mindestens bis zu einer entlang der Längsseite 28 des ersten Wandsegments 18, zu der die Durchbrechung 32 offen ist, verlaufenden Begrenzungslinie 60 erstreckt. Erfindungsgemäß ist vorgesehen, dass ein zweites Wandsegment 20 mit einer seiner Längsseiten 30 in der Draufsicht entlang der Begrenzungslinie 60 an das erste Wandsegment 18 anliegend angeordnet ist.

## Patentansprüche

1. Kabeleinführungsvorrichtung für eine Gehäusewand, vorzugsweise für den Boden (10) eines Schaltschranks, die einen Rahmen (12) aufweist, in den einzelne, aneinander gereihte flächige Wandsegmente (16, 18, 20) eingesetzt sind, welche mit ihren Schmalseiten (22) am Rahmen (12) befestigt sind, wobei zumindest ein erstes Wandsegment (18) mindestens eine zu einer seiner Längsseiten (28) offene Durchbrechung (32) aufweist, an der ein Halterahmen (36) angebracht ist, wobei der Halterahmen (36) Rahmenöffnungen (48) aufweist, die zu einer Einschubseite (44) des Halterahmens (36) offen sind, und in die Tüllen (38) zur Aufnahme von durch die Durchbrechung (32) durchzuführenden Kabeln bündig mit der Außenkontur des Halterahmens (36) an der Einschubseite (44) abschließend einsetzbar sind, und wobei der Halterahmen (36) mit seiner Einschubseite (44) sich in der Draufsicht mindestens bis zu einer entlang der Längsseite (28) des ersten Wandsegments (18), zu der die Durchbrechung (32) offen ist, verlaufenden Begrenzungslinie (60) erstreckt, wobei ein zweites Wandsegment (20) mit einer seiner Längsseiten (30) in der Draufsicht entlang der Begrenzungslinie (60) an das erste Wandsegment (18) anliegend angeordnet ist.

2. Kabeleinführungsvorrichtung nach Anspruch 1, **dadurch gekennzeichnet, dass** das erste Wandsegment (18) mit seiner Längsseite (28), zu der die Durchbrechung (32) offen ist, und der Halterahmen (36) mit seiner Einschubseite (44) in der Draufsicht entlang der Begrenzungslinie (60) zueinander fluchtend angeordnet sind.

3. Kabeleinführungsvorrichtung nach Anspruch 1, **dadurch gekennzeichnet, dass** der Halterahmen (36) mit seiner Einschubseite (44) über die Begrenzungslinie (60) übersteht.

4. Kabeleinführungsvorrichtung nach einem der vorangehenden Ansprüche, **dadurch gekennzeichnet, dass** der Halterahmen (36) auf eine Fläche (34) des ersten Wandsegments (18) aufgesetzt und an diesem festgeschraubt ist.

5. Kabeleinführungsvorrichtung nach einem der vorangehenden Ansprüche, **dadurch gekennzeichnet, dass** das erste Wandsegment (18) aus seiner Fläche (34) hervorstehende Rastelemente (56) mit Rasthaken (58) zum Festhalten des auf die Fläche (34) aufgesetzten Halterahmens (36) aufweist.

6. Kabeleinführungsvorrichtung nach einem der Ansprüche 1 bis 3, **dadurch gekennzeichnet, dass** die Durchbrechung (32) an ihrem Umfangsrand ein erstes Führungsprofil aufweist, das komplementär zu einem zweiten Führungsprofil am Halterahmen (36) ausgebildet ist.

7. Kabeleinführungsvorrichtung nach Anspruch 6, **dadurch gekennzeichnet, dass** das zweite Wandsegment (20) mit seiner Längsseite (30) zum Abdichten an der Einschubseite (44) anliegt.

8. Kabeleinführungsvorrichtung nach einem der vorangehenden Ansprüche, **dadurch gekennzeichnet, dass** das zweite Wandsegment (20) an seiner Längsseite (30) einen abgekanteten Streifen (63) zum Anlegen an das erste Wandsegment (18) und/oder an den Halterahmen (36) sowie an die Tüllen (38) aufweist.

9. Kabeleinführungsvorrichtung nach einem der vorangehenden Ansprüche, **dadurch gekennzeichnet, dass** das zweite Wandsegment (20) an seiner Längsseite (30) einen Dichtstreifen (64) zum Anlegen an das erste Wandsegment (18) und an den Halterahmen (36) sowie an die Tüllen (38) aufweist.

10. Kabeleinführungsvorrichtung nach Anspruch 9, **dadurch gekennzeichnet, dass** der Dichtstreichen kompressibel ist.

11. Kabeleinführungsvorrichtung nach einem der Ansprüche 1 bis 7, **dadurch gekennzeichnet, dass** das zweite Wandsegment (20) auf Stoß am ersten Wandsegment (18) anliegt.

12. Kabeleinführungsvorrichtung nach einem der vorangehenden Ansprüche, **dadurch gekennzeichnet, dass** die Wandsegmente (16, 18, 20) zumindest teilweise aus Metallblech bestehen.

13. Kabeleinführungsvorrichtung nach einem der vorangehenden Ansprüche, **dadurch gekennzeichnet, dass** zumindest ein Teil der Wandsegmente (16, 18, 20) Sicken und/oder Abkantungen (62) zur Versteifung aufweist.

14. Kabeleinführungsvorrichtung nach einem der vorangehenden Ansprüche, **dadurch gekennzeichnet, dass** mindestens eine der Rahmenöffnungen (48) Führungsprofile aufweist, in die komplementäre Führungsprofile an mindestens einer der Tüllen (38) formschlüssig einschiebbar sind.

15. Kabeleinführungsvorrichtung nach einem der vorangehenden Ansprüche, **dadurch gekennzeichnet, dass** mindestens eine der Tüllen (38) im Bereich der die Rahmenöffnungen (48) begrenzenden Seitenwände (50) in Einschubrichtung fixierbar ist.

16. Kabeleinführungsvorrichtung nach Anspruch 15, **dadurch gekennzeichnet, dass** die Seitenwände (50) der Rahmenöffnungen (48) mit Rastvertiefungen (52) oder Rastkanten zur Aufnahme von partiell über die Tüllenoberfläche seitlich überstehenden Rastorganen versehen sind.

## Claims

1. Cable insertion device for a housing wall, preferably for the base (10) of a switch cabinet, with a frame (12) in which are inserted in line with each other individual flat wall segments (16, 18, 20) that are attached with their narrow sides (22) to the frame (12), wherein at least one first wall segment (18) has at least one breakthrough (32) which is open to one of its long sides (28) and to which is attached a holder frame (36), wherein the holder frame (36) has frame openings (48) which are open to a plug-in side (44) of the holder frame (36) and in which can be inserted grommets (38) for holding cables passing through the breakthrough (32), which grommets (38) terminate flush with the outer contour of the holder frame (36) on the plug-in side (44), and wherein the holder frame (36) with its plug-in side (44) extends in plan view at least to a boundary line (60) running along the long side (28) of the first wall segment (18) to which the breakthrough (32) is open, wherein a second wall segment (20) is arranged with one of its long sides (30) lying in plan view along the boundary line (60) against the first wall segment (18).

2. Cable insertion device according to Claim 1, **characterised in that** the first wall segment (18) with its long side (28), to which the breakthrough (32) is open, and the holder frame (36) with its plug-in side (44) are arranged aligned to each other in plan view along the boundary line (60).

3. Cable insertion device according to Claim 1, **characterised in that** the holder frame (36) with its plug-in side (44) protrudes beyond the boundary line (60).

4. Cable insertion device according to any one of the preceding claims, **characterised in that** the holder frame (36) is placed on a surface (34) of the first wall segment (18) and is firmly screwed to this.

5. Cable insertion device according to any one of the preceding claims, **characterised in that** the first wall segment (18) has catch elements (56) protruding from its surface (34) with catch hooks (58) for fixing the holder frame (36) placed on the surface (34).

6. Cable insertion device according to any one of Claims 1 to 3, **characterised in that** the breakthrough (32) at its peripheral edge has a first guide profile which is formed complementary to a second guide profile on the holder frame (36).

7. Cable insertion device according to Claim 6, **characterised in that** the second wall segment (20) lies sealing with its long side (30) against the plug-in side (44).

8. Cable insertion device according to any one of the preceding claims, **characterised in that** the second wall segment (20) on its long side (30) has a chamfered strip (63) for laying against the first wall segment (18) and/or the holder frame (36) and the grommets (38).

9. Cable insertion device according to any one of the preceding claims, **characterised in that** the second wall segment (20) on its long side (30) has a sealing strip (64) for laying against the first wall segment (18) and the holder frame (36) and the grommets (38).

10. Cable insertion device according to Claim 9, **characterised in that** the sealing strip is compressible.

11. Cable insertion device according to any one of Claims 1 to 7, **characterised in that** the second wall segment (20) lies abutting against the first wall segment (18).

12. Cable insertion device according to any one of the preceding claims, **characterised in that** the wall segments (16, 18, 20) comprise at least partly sheet metal.

13. Cable insertion device according to any one of the preceding claims, **characterised in that** at least a part of the wall segments (16, 18, 20) has beads and/or chamfers (62) for reinforcement.

14. Cable insertion device according to any one of the preceding claims, **characterised in that** at least one of the frame openings (48) has guide profiles in which can be inserted by form fit complementary guide profiles on at least one of the grommets (38).

15. Cable insertion device according to any one of the preceding claims, **characterised in that** at least one of the grommets (38) can be fixed in the area of the side walls (50) adjacent to the frame openings (48) in the plug-in direction.

16. Cable insertion device according to Claim 15, **characterised in that** the side walls (50) of the frame openings (48) are fitted with catching recesses (52) or catching edges to hold catch elements partially protruding laterally over the grommet surface.

## Revendications

1. Dispositif d'introduction de câbles destiné à une paroi de boîtier, de préférence au fond (10) d'une armoire de commutation ou de distribution, présentant un encadrement (12) dans lequel sont insérés des segments aplatis de cloisonnement (16, 18, 20) individuels, mutuellement alignés et fixés audit encadrement (12) par leurs petits côtés (22), sachant qu'au moins un premier segment de cloisonnement (18) comporte au moins un percement (32) ouvert vers l'un de ses côtés longitudinaux (28), et au niveau de laquelle est implanté un cadre de retenue (36), ledit cadre de retenue (36) étant pourvu d'orifices (48) qui sont ouverts vers un côté d'insertion (44) dudit cadre de retenue (36) et dans lesquels des passe-câbles (38), conçus pour recevoir des câbles devant être engagés à travers ledit percement (32), peuvent être insérés dans l'affleurement du profil extérieur dudit cadre de retenue (36), en s'achevant sur ledit côté d'insertion (44), et sachant que le cadre de retenue (36) s'étend par son côté d'insertion (44), observé par-dessus, au moins jusqu'à une ligne de démarcation (60) s'étendant le long du côté longitudinal (28) du premier segment de cloisonnement (18) vers lequel le percement (32) est ouvert, un deuxième segment de cloisonnement (20) étant disposé par l'un de ses côtés longitudinaux (30), observé en plan le long de ladite ligne de démarcation (60), en applique contre ledit premier segment de cloisonnement (18).

2. Dispositif d'introduction de câbles, selon la revendication 1, **caractérisé par le fait que** le premier segment de cloisonnement (18) et le cadre de retenue (36) sont agencés avec alignement mutuel le long de la ligne de démarcation (60), observés par-dessus, le premier par son côté longitudinal (28) vers lequel le percement (32) est ouvert, le second par son côté d'insertion (44).

3. Dispositif d'introduction de câbles, selon la revendication 1, **caractérisé par le fait que** le cadre de retenue (36) dépasse au-delà de la ligne de démarcation (60) par son côté d'insertion (44).

4. Dispositif d'introduction de câbles, selon l'une des revendications précédentes, **caractérisé par le fait que** le cadre de retenue (36) est placé sur une surface (34) du premier segment de cloisonnement (18), et est assujetti à ce dernier par vissage.

5. Dispositif d'introduction de câbles, selon l'une des revendications précédentes, **caractérisé par le fait que** le premier segment de cloisonnement (18) présente des éléments de crantage (56) faisant saillie au-delà de sa surface (34), et munis de becs encliquetables (58) en vue de la consignation à demeure du cadre de retenue (36) placé sur ladite surface (34).

6. Dispositif d'introduction de câbles, selon l'une des revendications 1 à 3, **caractérisé par le fait que** le percement (32) offre, sur son bord périphérique, un premier profil de guidage de réalisation complémentaire de celle d'un second profil de guidage situé sur le cadre de retenue (36).

7. Dispositif d'introduction de câbles, selon la revendication 6, **caractérisé par le fait que** le deuxième segment de cloisonnement (20) est appliqué par son côté longitudinal (30) contre le côté d'insertion (44), à des fins d'étanchement.

8. Dispositif d'introduction de câbles, selon l'une des revendications précédentes, **caractérisé par le fait que** le deuxième segment de cloisonnement (20) comporte, sur son côté longitudinal (30), un listel (63) recourbé pour venir s'appliquer contre le premier segment de cloisonnement (18) et/ou contre le cadre de retenue (36), ainsi que contre les passe-câbles (38).

9. Dispositif d'introduction de câbles, selon l'une des revendications précédentes, **caractérisé par le fait que** le deuxième segment de cloisonnement (20) comporte, sur son côté longitudinal (30), un jonc d'étanchement (64) conçu pour venir en applique contre le premier segment de cloisonnement (18) et contre le cadre de retenue (36), ainsi que contre les passe-câbles (38).

10. Dispositif d'introduction de câbles, selon la revendication 9, **caractérisé par le fait que** le jonc d'étanchement est compressible.

11. Dispositif d'introduction de câbles, selon l'une des revendications 1 à 7, **caractérisé par le fait que** le deuxième segment de cloisonnement (20) porte bord à bord contre le premier segment de cloisonnement (18).

12. Dispositif d'introduction de câbles, selon l'une des revendications précédentes, **caractérisé par le fait que** les segments de cloisonnement (16, 18, 20) consistent, au moins partiellement, en de la tôle métallique.

13. Dispositif d'introduction de câbles, selon l'une des revendications précédentes, **caractérisé par le fait qu'**au moins une partie des segments de cloisonnement (16, 18, 20) présente des moulures et/ou des coudes (62), à des fins de rigidification.

14. Dispositif d'introduction de câbles, selon l'une des revendications précédentes, **caractérisé par le fait qu'**au moins l'un des orifices (48) du cadre offre des profils de guidage dans lesquels des profils complémentaires de guidage, situés sur au moins l'un des passe-câbles (38), peuvent être insérés par concordance de formes.

15. Dispositif d'introduction de câbles, selon l'une des revendications précédentes, **caractérisé par le fait qu'**au moins l'un des passe-câbles (38) peut être verrouillé à demeure, dans la direction d'insertion, dans la région des parois latérales (50) délimitant les orifices (48) du cadre.

16. Dispositif d'introduction de câbles, selon la revendication 15, **caractérisé par le fait que** les parois latérales (50) des orifices (48) du cadre sont dotées de creusures de crantage (52) ou de bords de crantage, destiné(e)s à recevoir des organes encliquetables faisant partiellement saillie, dans le sens latéral, au-delà de la surface des passe-câbles.
